# EUROPÄISCHE PATENTSCHRIFT

(11) **EP 2 596 987 B1**
(45) Veröffentlichungstag und Bekanntmachung des Hinweises auf die Patenterteilung: **03.04.2019**
(21) Anmeldenummer: 12189398.6
(22) Anmeldetag: 22.10.2012
(51) Int. Cl.: B60Q 1/06, F21S 41/19, F21S 41/29, F21S 41/39, F21S 41/47, F21S 45/49, F21S 45/43, F21S 41/63, F21S 41/675, F21S 41/698, F21S 45/47, F21S 45/60

(54) **LICHTMODUL EINES SCHEINWERFERS MIT EINEM HYBRIDKÜHLKÖRPER**
LIGHT MODULE OF A HEADLAMP WITH A HYBRID COOLING BODY
MODULE D'ÉCLAIRAGE D'UN PHARE AVEC UN CORPS DE REFROIDISSEMENT HYBRIDE

(30) Priorität: 28.11.2011 DE 102011087224
(43) Veröffentlichungstag der Anmeldung: 29.05.2013
(73) Patentinhaber: Automotive Lighting Reutlingen GmbH, 72762 Reutlingen (DE)
(72) Erfinder: Braun, Stephan, 70771 Echterdingen (DE); Schauwecker, Friedrich, 72793 Pfullingen (DE); Bahnmüller, Gerd, 71088 Holzgerlingen (DE)
(74) Vertreter: DREISS Patentanwälte PartG mbB

(56) Entgegenhaltungen:
- EP-A1- 1 726 874
- EP-A2- 1 762 432
- DE-A1-102006 034 781
- DE-A1-102008 030 353
- DE-U1-202011 108 359
- FR-A1- 2 868 149
- US-A1- 2010 246 204

## Beschreibung

Die vorliegende Erfindung betrifft ein Lichtmodul eines Kraftfahrzeugscheinwerfers nach dem Oberbegriff des Anspruchs 1. Ein solches Lichtmodul ist aus der DE 10 2009 033 909 A1 bekannt. Bei diesem Stand der Technik dient das Trägerelement zur Befestigung der genannten Bestandteile des Kurvenlichtmoduls und darüber hinaus als Kühlkörper für die Halbleiterlichtquelle sowie als Gehäuse für ein Kühlgebläse. Das Trägerelement besteht aus einem metallischen Werkstoff mit guter Wärmeleitfähigkeit wie Aluminium, Magnesium und Kupfer oder einer auf diesen Metallen basierenden Legierung. Aus der DE 10 2006 034 781 A1 ist ein Lichtmodul bekannt, bei dem ein hinterer, aus Metall bestehender Abschnitt eines als Blende und Linsenhalter dienenden Abschirmteils in einen vorderen, aus Kunststoff bestehenden Teil des Abschirmteils eingebettet ist.

Die oben genannten Bestandteile bilden zusammen einen in sich starren Verbund, der im Folgenden auch als Komplexlichtquelle bezeichnet wird.

Darüber hinaus sind Druckgusskühlkörper zur Kühlung von Halbleiterlichtquellen in Lichtmodulen von Kraftfahrzeugscheinwerfern bekannt, die auf Kunststoffteilen mittels Schraubverbindungen oder ähnlichen Verbindungen befestigt werden. Die dabei auftretenden Montagetoleranzen fließen voll in die Lagetoleranz der Halbleiterlichtquelle zum restlichen optischen System ein. Dies ist unerwünscht, weil es diese Lagetoleranzen im Ergebnis vergrößert. Die geschraubten Verbindungen führen darüber zu Einschränkungen bei der Gestaltungsfreiheit der Bauteile, weil einerseits Bauraum für die Schraubverbindungen selbst vorhanden sein muss und weil zusätzlich sichergestellt sein muss, dass die Schraubverbindungen mit Werkzeug erreichbar sein müssen.

Die Zahl der nachteiligen geschraubten Verbindungen von Kunststoffteilen ist bei dem eingangs genannten Stand der Technik vorteilhaft klein, da die untereinander starr zu verbindenden Bestandteile der Komplexlichtquelle dort direkt an dem metallischen Trägerelement befestigt werden.

Wie bereits erwähnt, ist das Trägerelement dazu eingerichtet, mit einer Halbleiterlichtquelle, einem Reflektor, einer Aufnahme für eine Blende, und einem Linsenhalter verbunden zu werden. Weil es sich bei dem Lichtmodul um ein sogenanntes Kurvenlichtmodul, also ein im eingebauten Zustand nach rechts und links schwenkbares Lichtmoduls handelt, muss das Trägerelement zusätzlich noch dazu eingerichtet sein, Teile von Gelenken wie Lagerstifte oder Lagerhülsen für die Verwirklichung einer Kurvenlichtfunktion bereitzustellen.

Da gleichzeitig eine kompakte Bauweise gefordert ist, ergeben sich komplizierte Formen für das Trägerelement, die sich als metallische einstückige Struktur nur schwer verwirklichen lassen.

Die Erfindung löst diesen Zielkonflikt, der durch die Forderungen nach der Bereitstellung zahlreicher Befestigungsgeometrien bei gleichzeitiger kompakter Bauweise bedingt ist, dadurch, dass sich das Trägerelement aus einer als Kühlkörper und Stützkörper dienenden ersten Trägerstruktur aus Metall und einer als Halterahmen dienenden zweiten Trägerstruktur aus einem Kunststoff oder einem auf Kunststoff basierenden Verbundmaterial zusammensetzt, wobei alle Bestandteile des optischen Systems an der zweiten Trägerstruktur aus Kunststoff befestigt sind und wobei ein Teil der ersten Trägerstruktur in das Material der zweiten Trägerstruktur fest und nicht zerstörungsfrei lösbar eingebettet ist und wobei die zweite Trägerstruktur in einem Schwenkrahmen um einer Achse schwenkbar gelagert ist.

Aufgrund dieses aus zwei unlösbar miteinander verbundenen Komponenten bestehenden Aufbaus kann ein solches Trägerelement auch als Hybridkühlkörper bezeichnet werden. Dadurch, dass die erste Trägerstruktur aus Metall besteht, wird eine ausreichend feste und formstabile Basis für das Trägerelement bereitgestellt. Das metallische Material erlaubt darüber hinaus aufgrund seiner hohen Temperaturbeständigkeit und Wärmeleitfähigkeit eine zuverlässige und ausreichende Kühlung der Halbleiterlichtquelle.

Dadurch, dass die zweite Trägerstruktur aus einem Kunststoff oder aus einem auf Kunststoff basierenden Verbundmaterial besteht, kann die zweite Trägerstruktur im Vergleich zu einer metallischen Struktur mit wesentlich weniger Aufwand hergestellt werden, was insbesondere bei der Erzeugung kompakter Befestigungsgeometrien oder anderer komplizierter Formen und Strukturen von großem Vorteil ist.

Eine bevorzugte Ausgestaltung zeichnet sich dadurch aus, dass der eingebettete Teil der ersten Trägerstruktur durch Umspritzen dieses Teils mit Material der zweiten Trägerstruktur in das Material der zweiten Trägerstruktur eingebettet ist.

Dadurch, dass ein Teil der ersten Trägerstruktur durch Umspritzen dieses Teils mit Material der zweiten Trägerstruktur in die zweite Trägerstruktur fest und nicht zerstörungsfrei lösbar eingebettet ist, werden die genannten Nachteile der Schraubverbindungen vermieden. Das Umspritzen kann zum Beispiel in einer durch das Spritzwerkzeug genau vorgegebenen Relativposition beider Strukturen zueinander erfolgen, bei der nur Toleranzen auftreten, die wesentlich kleiner sind als die bei Schraubverbindungen zu erwartenden Toleranzen. Bauraum für Schraubverbindungen und für eine Zugänglichkeit solcher Schraubverbindungen für Werkzeug muss dabei nicht freigehalten werden.

Bevorzugt ist auch, dass die erste Trägerstruktur Vorsprünge und/oder Ausnehmungen aufweist, die beim Aushärten des Materials der zweiten Trägerstruktur einen Formschluss mit dem sie umgebenden Material der zweiten Trägerstruktur eingehen.

Ferner ist bevorzugt, dass die zweite Trägerstruktur ein auf Kunststoffmaterial basierendes Verbundmaterial enthält, das eine Wärmeleitfähigkeit besitzt, die größer ist als die Wärmeleitfähigkeit des Kunststoff-Basismaterials. Bevorzugt ist auch, dass ein Polyetherimid (PEI)-Kunststoff ein Basismaterial für den Verbundwerkstoff ist.

Eine weitere Ausgestaltung zeichnet sich durch Ultem als Basismaterial für den Verbundwerkstoff aus.

Bevorzugt ist auch, dass der Verbundwerkstoff Kohlefasern und/oder Metalloxide als Zusätze enthält.

Ferner ist bevorzugt, dass die erste Trägerstruktur als Gehäuse ausgestaltet ist, das ein Gebläse aufnimmt.

Eine weitere bevorzugte Ausgestaltung zeichnet sich dadurch aus, dass die zweite Trägerstruktur Befestigungsgeometrien für die Komplexlichtquelle und/oder für optische Elemente des Lichtmoduls aufweist.

Bevorzugt ist auch, dass die zweite Trägerstruktur in ihr Material eingebettete Lagerstifte aus Metall, eine Aufnahme für eine schwenkbare Blende und deren Antrieb und eine Aufnahme für eine Linsenhalterung aufweist.

Aus den Ausgestaltungen resultierende Vorteile ergeben sich aus der Beschreibung und den beigefügten Figuren.

Es versteht sich, dass die vorstehend genannten und in nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen,welche durch die beigelegte Ansprüche definiert wird.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Fahrzeugscheinwerfer als technisches Umfeld der Erfindung;
- Fig. 2: eine Draufsicht auf ein Trägerelement;
- Fig. 3: einen Schnitt durch das Trägerelement aus der Fig. 2; und
- Fig. 4: einen Schnitt durch ein Kurvenlichtmodul, das ein Trägerelement wie in den Figuren 2 und 3 und weitere Komponenten aufweist.

Dabei bezeichnen gleiche Bezugszeichen in den verschiedenen Figuren jeweils gleiche oder zumindest ihrer Funktion nach gleiche Elemente.

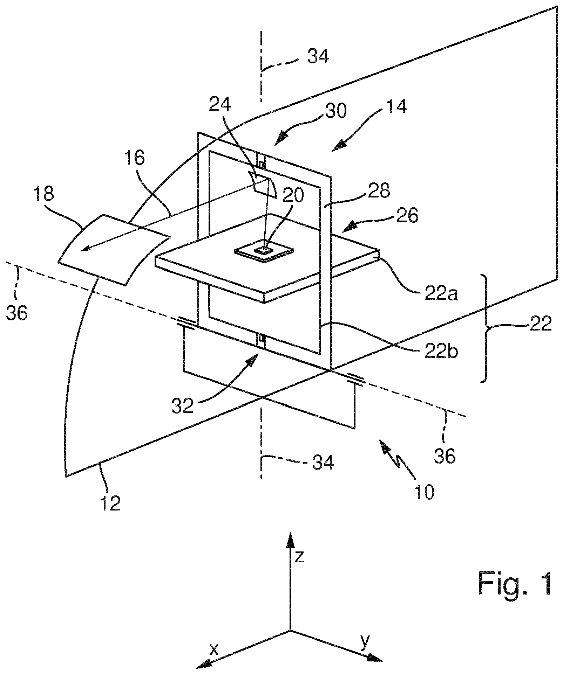

Figur 1 zeigt das technische Umfeld der Erfindung. Im Einzelnen zeigt die Figur 1 einen Kraftfahrzeugscheinwerfer 10 mit einem Scheinwerfergehäuse 12, einem in dem Scheinwerfergehäuse 12 angeordneten Kurvenlichtmodul 14 und einer für Licht 16 durchlässigen Abdeckscheibe 18.

Das Licht 16 wird von einer Lichtquelle 20 erzeugt, die in der dargestellten Ausgestaltung eine Halbleiterlichtquelle, insbesondere eine Anordnung aus mehreren Leuchtdioden ist und die auf einem als erste Trägerstruktur 22a dienenden Bestandteil eines Trägerelements 22 montiert ist.

Das Trägerelement 22 weist darüber hinaus einen eine zweite Trägerstruktur 22b auf, die mit der ersten Trägerstruktur 22a starr verbunden ist.

Die Erfindung ist auf eine Verwendung in Verbindung mit Halbleiterlichtquellen beschränkt. Es wäre aber möglich auch andere Lichtquellen, insbesondere Glühlampen oder Gasentladungslampen zu verwenden.

Durch ein optisches System 24 wird das von der Lichtquelle 20 erzeugte Bündel aus Licht 16 gebündelt und gegebenenfalls zusätzlich beeinflusst, um eine gewünschte Lichtverteilung vor dem Kraftfahrzeugscheinwerfer 10 zu erzielen. In der dargestellten Ausgestaltung ist das optische System 24 ein Reflektor. Alternativ oder ergänzend können Blendenanordnungen und/oder Linsen als optische Elemente verwendet werden, um optische Systeme 24 in Form von Reflexionssystemen oder Projektionssystemen zu realisieren und/oder um verschiedene Lichtverteilungen zu erzeugen.

Die verschiedenen Lichtverteilungen unterscheiden sich zum Beispiel dadurch, ob sie eine definierte Hell-Dunkel-Grenze aufweisen oder nicht und gegebenenfalls darin, wie eine solche Hell-Dunkel-Grenze ausgestaltet ist. Unter dem optischen System 24 wird hier die Summe aller optischen Elemente verstanden, die die Intensität und/oder Richtung des von der Lichtquelle 20 emittierten Lichtes bis zu seinem Austritt aus dem Kurvenlichtmodul 14 beeinflussen. Die Bestandteile des optischen Systems 24 sind an dem Trägerelement 22 befestigt, wobei die Befestigung an der zweiten Trägerstruktur 22b erfolgt.

Das Kurvenlichtmodul 14 weist eine Komplexlichtquelle 26 und einen Schwenkrahmen 28 auf. Die Komplexlichtquelle ist dabei eine bauliche Einheit aus der Lichtquelle 20, dem Trägerelement 22 und dem optischen System 24.

Die Komplexlichtquelle 26 ist in einer ersten Lagerung 30 und einer zweiten Lagerung 32 in dem Schwenkrahmen 28 um eine erste Achse 34 schwenkbar aufgehängt.

Die erste Achse 34 ist dabei so ausgerichtet, dass das Kurvenlichtmodul 14 bei seiner bestimmungsgemäßen Verwendung in einem in ein Kraftfahrzeug eingebauten Kraftfahrzeugscheinwerfer 10 durch eine um diese erste Achse 34 herum erfolgende Schwenkbewegung nach rechts und links geschwenkt werden kann. Dadurch kann das Kurvenlichtmodul 14 in Kurven zum Kurveninneren hin gerichtet werden, beziehungsweise es kann in die Richtung der eingeschlagenen lenkbaren Räder des Kraftfahrzeugs gerichtet zu werden.

Die erste Achse 34 wird daher im Allgemeinen bei einer bestimmungsgemäßen Verwendung des Kurvenlichtmoduls 14 parallel zu einer Hochachse des Kraftfahrzeugs ausgerichtet sein. Dies entspricht der in den Figuren angegebenen z-Richtung. Die x-Richtung liegt parallel zu einer Längsachse des Fahrzeugs und die y-Richtung liegt parallel zu einer Hochachse des Fahrzeugs. Diese Richtungsangaben stellen insbesondere einen Bezug zwischen verschiedenen Blickperspektiven der Figuren her.

Der Stellantrieb, der die Stellkraft zum Verschwenken der Komplexlichtquelle 26 in dem Schwenkrahmen 28 aufbringt, ist bevorzugt ein Elektromotor. Der Stellantrieb ist in einer Ausgestaltung an Komplexlichtquelle 26 befestigt und stützt sich an dem Schwenkrahmen 28 ab. In einer dazu alternativen Ausgestaltung ist der Stellantrieb an dem Schwenkrahmen 28 befestigt und stützt sich an der Komplexlichtquelle 26 ab.

Die Kurvenlichtfunktion im Allgemeinen und die zu ihrer Verwirklichung erforderlichen Ausgestaltungen optischer Elemente, Schwenkantriebe und Steuerelemente sind dem Fachmann vertraut und bedürfen daher an dieser Stelle keiner weiteren Erläuterung.

In der dargestellten Ausgestaltung ist der Schwenkrahmen 28 mit dem Kurvenlichtmodul 14 in dem Gehäuse 12 zusätzlich um eine zur ersten Achse 34 orthogonale zweite Achse 36 schwenkbar, die im Wesentlichen quer zur x-Richtung und damit zur Hauptabstrahlrichtung des Lichtes liegt. Die zweite Achse 36 wird daher im Allgemeinen bei einer bestimmungsgemäßen Verwendung des Kurvenlichtmoduls 14 parallel zu einer Querachse des Kraftfahrzeugs, also parallel zur y-Richtung ausgerichtet sein.

Die Schwenkbarkeit des Kurvenlichtmoduls 14 um die zweite Achse 36 herum erlaubt eine Leuchtweitenregulierung. Auch hier gilt, dass der für diese Funktion erforderliche Stellantrieb bevorzugt ein Elektromotor ist. Ferner gilt auch hier, dass der Stellantrieb alternativ mit dem Schwenkrahmen mitschwenkend und sich an dem Gehäuse abstützend an dem Schwenkrahmen 28 befestigt ist oder dass der Schwenkrahmen nicht mitschwenkend und sich an dem Schwenkrahmen 28 abstützend an dem Gehäuse befestigt ist.

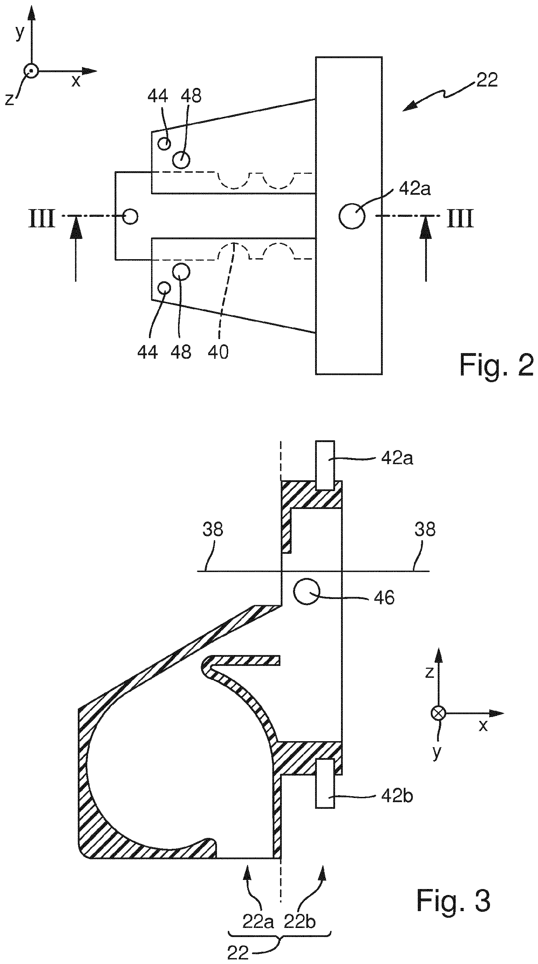

Figur 2 zeigt eine Draufsicht auf ein Trägerelement 22, und die Fig. 3 zeigt einen Schnitt durch das Trägerelement 22 der Fig. 2, wobei der Schnitt an einer optischen Achse 38 des Trägerelements 22 entlang geführt ist.

Das Trägerelement 22 hat die Aufgabe, Wärme von der Halbleiterlichtquelle 20 aufzunehmen und abzuführen und gleichzeitig als zentrales Strukturelement der Komplexlichtquelle 26 die Lagerstellen, Anlenkpunkte der Schwenkfunktion, einer ggf. vorhandenen schwenkbaren Blende, und der Aufnahme einer Linsenhalterung und/oder eines Reflektors zu definieren.

Die erste Trägerstruktur 22a besteht bevorzugt aus Metall, und die zweite Trägerstruktur 22b besteht aus einem Kunststoff oder einem auf Kunststoff basierenden Verbundmaterial. Im Vergleich zum Stand der Technik, bei dem Druckgusskühlkörper zur Kühlung von Halbleiterlichtquellen auf Kunststoffteilen mit Schraubverbindungen oder ähnlichen Verbindungen befestigt werden und bei dem die dabei auftretenden Montagetoleranzen voll in die Lagetoleranz der LED zum restlichen optischen System einfließen, werden die Lagetoleranzen der Halbleiterlichtquellen auf dem Kühlkörper, hier dem als Hybridkühlkörper dienenden Trägerelement 22 minimiert, und es wird gleichzeitig die Baugröße minimiert.

Aufgrund der geforderten Kompaktbauweise und der resultierenden Komplexität der Herstellungswerkzeuge, insbesondere der für eine Herstellung durch Spritzgießen erforderlichen Spritzgussformen, ist es vorteilhaft, das Trägerelement 22 als 2-Komponenten-Teil in Form einer Kombination eines Kunststoffteils und eines Metallteils, insbesondere eines Metalldruckguss-Teils, zu verwirklichen.

Ein Teil der ersten Trägerstruktur 22a ist durch Umspritzen dieses Teils mit Material der zweiten Trägerstruktur 22b in die zweite Trägerstruktur 22b fest und nicht zerstörungsfrei lösbar eingebettet. Die erste Trägerstruktur 22a weist bevorzugt Vorsprünge und/oder Ausnehmungen 40 auf, die beim Aushärten des Materials der zweiten Trägerstruktur 22b einen Formschluss mit dem sie umgebenden Material der zweiten Trägerstruktur 22b eingehen. Dadurch wird eine mechanisch besonders stabile und belastbare Verbindung zwischen den beiden Trägerstrukturen 22a und 22b erzeugt.

Durch das Umspritzen der ersten Trägerstruktur 22a mit dem Material der zweiten Trägerstruktur 22b werden die Toleranzen minimiert und die Bauteilgröße wird insgesamt minimiert. Ferner werden durch das Umspritzen Einschränkungen bei der Bauteilgestaltung, die sich bei einem Verschrauben von erster und zweiter Trägerstruktur aufgrund der erforderlichen Zugänglichkeit der Schraubverbindungen für Werkzeug ergeben würden, vermieden.

Die zweite Trägerstruktur 22b weist Befestigungsgeometrien für optische Elemente des Lichtmoduls 14 auf. Dabei wird hier unter einer Befestigungsgeometrie jeder strukturelle Bestandteil verstanden, der zur Befestigung eines Teils an einem anderen Teil dient. Beispiele solcher Befestigungsgeometrien sind Ausnehmungen und Vorsprünge, die zur starren Verbindung von zwei Teilen oder zu einer über ein Gelenk erfolgenden Verbindung von zwei Teilen oder zu einer Aufnahme eines Teils in einem anderen Teil dienen, wobei das eine Teil in dem anderen Teil drehbar oder schwenkbar gelagert ist.

Fig. 2 zeigt zum Beispiel einen Lagerstift 42a, der zur schwenkbaren Lagerung der Komplexlichtquelle 26 in dem Schwenkrahmen 28 dient. Der Lagerstift 42a besteht bevorzugt aus Metall und ist in das Kunststoffmaterial der zweiten Trägerstruktur 22b eingebettet. Darüber hinaus zeigt die Fig. 2 Ausnehmungen in der zweiten Trägerstruktur 22b, die zur Befestigung eines Reflektors oder eines anderen optischen Elements des optischen Systems 24 dienen.

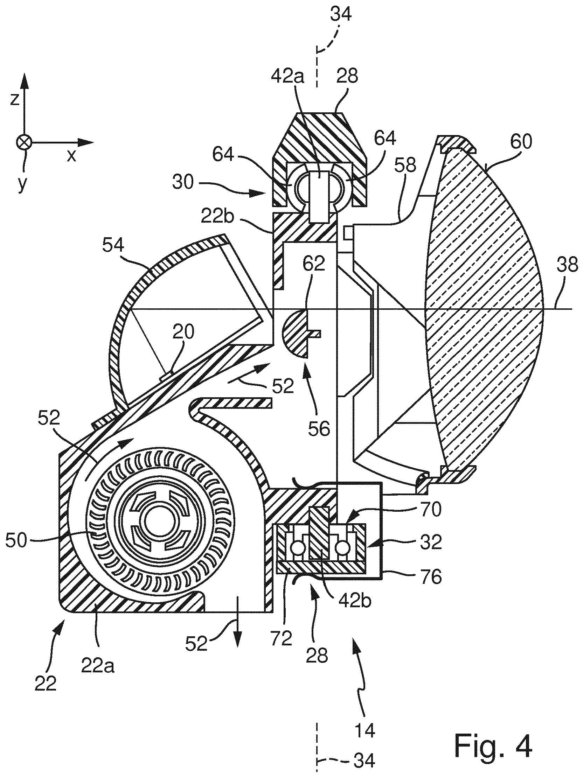

Die zur Anordnung der Halbleiterlichtquelle 20 räumlich nahe und auf der zweiten Trägerstruktur 22b aus Kunststoff oder einem Kunststoffverbundmaterial erfolgende Befestigung eines Reflektors, insbesondere eines Reflektors, der die in Figur 4 dargestellte Souffleusen-Form aufweist, ermöglicht den bewährten Einsatz von Schneidschrauben im Material der zweiten Trägerstruktur 22b.

Gleichzeitig ist die Toleranzempfindlichkeit des Systems stark gemindert durch die vorteilhafte Sperrwirkung des Metallteils in unmittelbare Nähe zum Reflektoranfügepunkts.

Die durch die Vielfalt der Funktionen erforderliche Komplexität des Trägerelements 22 wird bevorzugt dadurch verwirklicht, dass der Hauptanteil der erforderlichen Strukturen in der zweiten Trägerstruktur 22b verwirklicht wird, für dessen Herstellung eine Kunststoff-Spritzgusstechnologie verwendbar ist. Dies ist insbesondere vorteilhaft für die Einbettung präziser Lagerstifte 42a aus Metall, einer Aufnahme 46 (vergleiche Fig. 3)für eine schwenkbare Blende und deren Antrieb und der Aufnahme für eine Linsenhalterung mit Linse.

Weitere Ausnehmungen 48 in der zweiten Trägerstruktur 22b dienen zur Befestigung eines Halters, der seinerseits dazu eingerichtet ist, den Chip der Halbleiterlichtquelle in einer vorbestimmten Position relativ zum optischen System der Komplexlichtquelle 26 zu halten und den Chip dabei gleichzeitig gegen eine metallische Oberfläche der ersten Trägerstruktur 22a zu drücken. Der Halter ist bevorzugt ein Bauteil, das den Abstand zwischen den Ausnehmungen 48 in der zweiten Trägerstruktur 22b überspannt. Zwischen den beiden Ausnehmungen 48 liegt ein Bereich der ersten Trägerstruktur 22a frei. Dieser Bereich wird also nicht durch die zweite Trägerstruktur 22b abgedeckt. In diesem frei liegenden Bereich ist, bei montierter Komplexlichtquelle 26, der Chip der Halbleiterlichtquelle 20 in thermischen Kontakt mit der frei liegenden Oberfläche der ersten Trägerstruktur 22a angeordnet und wird dabei durch den Halter auf die erste Trägerstruktur gedrückt. Dabei ist der Halter so geformt, dass er Ränder des Chips abdeckend übergreift, ohne dabei eine Lichtaustrittsfläche der Halbleiterlichtquelle abzudecken, so dass diese ihr Licht ungehindert abstrahlen kann.

Dadurch, dass die Befestigungsgeometrien für den Halter des Chips der Halbleiterlichtquelle 20 und für den Reflektor oder ein anderes optisches Element des optischen Systems 24 der Komplexlichtquelle 26 Bestandteile der durch die eingebettete erste metallische Trägerstruktur 22a verstärkten zweiten Trägerstruktur 22b sind, ergibt sich vorteilhafterweise eine Anordnung von Halbleiterlichtquelle 20 und optischem System 24, bei der nur sehr geringe Lagetoleranzen auftreten.

Durch den Andruck gegen die metallische Oberfläche der ersten Trägerstruktur wird ein guter thermischer Kontakt zwischen dem Chip der Halbleiterlichtquelle und der ersten Trägerstruktur erzeugt, so dass die im Chip beim Betrieb der Halbleiterlichtquelle freiwerdende Wärme effektiv von der auch als Kühlkörper dienenden ersten Trägerstruktur aufgenommen werden kann.

Die Fig. 3 zeigt darüber hinaus eine Ausnehmung 46 in der zweiten Trägerstruktur 22b, die zur Aufnahme und Lagerung einer schwenkbaren Blende oder einer Blendenwalze dient. Ferner zeigt die Fig. 3 sowohl einen oberen Lagerstift 42a als auch einen unteren Lagerstift 42b für Kurvenlichtfunktion. Weitere Befestigungsgeometrien dienen zur Befestigung eines Antriebs für die schwenkbare Blende und/oder zur Anlenkung oder Befestigung eines Antriebs für die Kurvenlichtfunktion. Auch diese Befestigungsgeometrien sind bevorzugt Bestandteile der zweiten Trägerstruktur 22b. Sie sind in der schematischen Darstellung der Figuren 2 und 3 nicht dargestellt. Insgesamt wird sich für die zweite Trägerstruktur 22b wegen der Vielzahl von Befestigungsgeometrien eine komplexe, zerklüftete Form ergeben, die eine vergleichsweise große Oberfläche besitzt.

Aufgrund der großen Oberfläche ist auch die zweite Trägerstruktur 22b prinzipiell für eine Verwendung als Kühlkörper geeignet. Dies setzt jedoch eine ausreichend große Wärmeleitfähigkeit zwischen Orten der Wärmeeinleitung und der Wärme an die Umgebung abgebenden Oberfläche voraus. In einer bevorzugten Ausgestaltung besteht die zweite Trägerstruktur 22b aus einem auf Kunststoffmaterial basierenden Verbundmaterial, das eine Wärmeleitfähigkeit besitzt, die größer ist als die Wärmeleitfähigkeit des Kunststoff-Basismaterials.

Als Basismaterial für den Verbundwerkstoff kommt ein Polyetherimid (PEI)- Kunststoff wie Ultem in Frage. Polyetherimid (PEI) im allgemeinen und so auch Ultem zeichnet sich durch eine ausreichende Temperaturfestigkeit und eine sehr geringe Ausgasung aus. Die geringe Ausgasung hat den Vorteil, dass sich auch über der jahrelangen Betriebszeit in Kraftfahrzeugen keine Verschlechterung der optischen Eigenschaften durch eine Kondensation von ausgegastem Material auf einer Reflexionsfläche oder einer Transmissionsfläche des Projektions-Lichtmoduls ergibt.

Polyetherimide wie Ultem werden in reiner Form und mit verschiedenen Zusätzen angeboten. Das Material ist sehr beständig gegenüber UV-Strahlen und lässt sich im Spritzgießverfahren verarbeiten. Die Verarbeitungstemperatur liegt je nach Typ zwischen 320 und 400 °C, bei einer Werkzeugtemperatur zwischen 120 und 180 °C.

Als Zusätze werden bevorzugt Kohlefasern und/oder Metalloxide verwendet, letztere insbesondere in Pulverform. Die Zusätze werden bevorzugt so klein gemahlen, dass sie zusammen mit dem Kunststoffmaterial in einem Spritzgussvorgang gemeinsam verarbeitet werden können.

Das Trägerelement 22 setzt sich daher aus einer primär als Kühlkörper und Stützkörper dienenden ersten Trägerstruktur 22a und einer primär als Halterahmen dienenden zweiten Trägerstruktur 22b zusammen. Die erste Trägerstruktur 22a besteht bevorzugt aus einem gut wärmeleitfähigen Metall, um als Kühlkörper für die Halbleiterlichtquelle und bevorzugt auch als Gebläsegehäuse dienen zu können. Bei diesem Teil kommt es insbesondere auf die thermischen Eigenschaften und die Festigkeit an. In einer besonders bevorzugten Ausgestaltung ist die erste Trägerstruktur 22a als Metalldruckgussteil verwirklicht.

Eine Positionierung eines Gebläses unter der Wärmeeinleitungsstelle durch die Halbleiterlichtquelle 20 (vergleiche Fig. 4) optimiert die Entwärmung des Chips der Halbleiterlichtquelle 20, wobei die Formgebung des Druckgussteiles in Kombination mit dem Kunststoffteil zusätzlich eine kontrollierte Luftführung zu den Bauteilen wie Linse und Blendenwalze ermöglicht. Der Luftstrom 52 kann so auch zu anderen Bauteilen geleitet werden.

Das Gebläse 50 ist bevorzugt ist über eine Bügelfeder in der ersten Trägerstruktur 22a befestigt und im Bedarfsfall durch Wegschwenken des Moduls leicht auswechselbar.

Die zweite Trägerstruktur 22b dient primär zur Befestigung und/oder Aufnahme und/oder Lagerung weiterer Teile des Lichtmoduls 14 wie der Lagerung einer Blendenwalze eines Projektionslichtmoduls und der Befestigung ihres Antriebs. Bei diesem Teil ist es vorteilhaft, wenn sich komplexe Befestigungsstrukturen wie Formschlusselemente wie Rastnasen und dergleichen ohne großen Aufwand herstellen lassen. Diese Forderung wird insbesondere durch Spritzgussteile aus Kunststoff oder einem KunststoffVerbundmaterial erfüllt.

Erfindungsgemäß besteht die zweite Trägerstruktur 22b aus einem solchen Material. Die Befestigung der zweiten Trägerstruktur 22b an der ersten Trägerstruktur 22a erfolgt dadurch, dass ein Abschnitt der ersten Trägerstruktur 22a in eine Kunststoffspritzgussform der zweiten Trägerstruktur 22b eingelegt und mit Kunststoffmaterial der zweiten Trägerstruktur 22b umspritzt wird, so dass nach dem Erkalten und Aushärten eine nicht mehr zerstörungsfrei lösbare Verbindung zwischen der ersten Trägerstruktur 22a und dem Halterahmen 22b besteht. Dadurch werden die Lagetoleranzen zwischen den einzelnen Bestandteilen des optischen Systems 22, die, wie die Lichtquelle 20 an der als Kühlkörper dienenden ersten Trägerstruktur anliegen, oder die, wie die Blendenwalze 56 und die Projektionslinse 60, an der als Halterahmen dienenden zweiten Trägerstruktur 22b befestigt sind, klein gehalten.

Darüber hinaus wird durch das Umspritzen ein sehr guter thermischer Kontakt zwischen der als Kühlkörper dienenden ersten Trägerstruktur 22a und der zweiten Trägerstruktur 22b hergestellt, der ebenfalls zu einer Nivellierung der Temperaturunterschiede innerhalb des Kurvenlichtmoduls beiträgt.

Figur 4 zeigt einen Schnitt durch ein Kurvenlichtmodul 14, das ein Trägerelement 22 wie in den Figuren 2 und 3 und weitere Komponenten aufweist. Das Kurvenlichtmodul 14 weist insbesondere eine Komplexlichtquelle und einen Schwenkrahmen 28 auf. Die Komplexlichtlichtquelle weist das Trägerelement 22, eine Halbleiterlichtquelle 20 und ein optisches System auf. Das optische System weist in der dargestellten Ausgestaltung einen Reflektor, eine Blende, hier in Form einer Blendenwalze 56, einen Linsenhalter 58 und eine Projektionslinse 60 auf.

Die Blendenwalze 56 ist allgemein ein Teil eines Projektionssystems und ist dort zwischen einer Primäroptik, hier dem Reflektor 54, und einer Sekundäroptik, hier der Projektionslinse 60 angeordnet.

Bei einem Projektionssystem bündelt die Primäroptik Licht einer Lichtquelle, hier der Halbleiterlichtquelle 20, in ein kleines Volumen innerhalb des Lichtmoduls 14, das sich auf der Höhe der optischen Achse 38 im Lichtweg zwischen der Primäroptik und der Sekundäroptik befindet. Mit anderen Worten: Die Primäroptik ist auf das kleine Volumen fokussiert. Dies leistet zum Beispiel eine Anordnung aus einem Ellipsoidreflektor und einer Lichtquelle, die in einem ersten Brennpunkt des Reflektors angeordnet ist, wenn sich das kleine Volumen im zweiten Brennpunkt, bzw. Brennbereich des Reflektors befindet. Die Sekundäroptik ist ebenfalls auf das kleine Volumen fokussiert und projiziert die sich in dem kleinen Volumen einstellende Lichtverteilung in das Vorfeld des Lichtmoduls. Eine Blendenkante 62, die sich innerhalb des kleinen Volumens befindet, wird dann durch die Sekundäroptik als Hell-Dunkel-Grenze in der in das Vorfeld projizierten Lichtverteilung abgebildet. Anstelle eines Reflektors als Primäroptik kann auch eine Licht der Lichtquelle fokussierende Linse oder eine mit interner Totalreflexion arbeitende Vorsatzoptik als Primäroptik verwendet werden.

Die Blendenwalze wird etwa auf ihrer ganzen Länge durch die Primäroptik beleuchtet und liegt sowohl im Fokus der Primäroptik als auch im Fokus der Sekundäroptik. Der unterhalb der Blendenkante 62 liegende Bereich der Lichtverteilung oder Beleuchtung wird dabei durch die Blendenwalze 56 abgeschattet und erscheint als dunkler Bereich in der auf die Straße projizierten Lichtverteilung.

Die Hell-Dunkel-Grenze ergibt sich damit als Bild einer optisch wirksamen Kontur der Blendenwalze. Die Blendenwalze weist auf ihrer Mantelfläche mehrere parallel zu einer Längsachse der Walze liegende Konturen auf. Je nach Drehstellung der Walze liegt die eine oder eine andere Kontur in der Lichtverteilung innerhalb des kleinen Volumens, so dass sich durch Drehen der Blendenwalze in verschiedene Drehpositionen verschiedene Abblendlichtverteilungen erzeugen lassen.

Die Komplexlichtquelle ist in dem Schwenkrahmen 28 um die erste Achse 34 herum schwenkbar in Lagern 30 und 32 gelagert.

Das Trägerelement 22 hat bei der dargestellten Ausgestaltung unter anderem auch die Funktion eines Gehäuses für das Gebläse 50, das einen Luftstrom 52 erzeugt. Dies ist jedoch nicht zwingend.

Bei einer bevorzugten Ausgestaltung werden neben der Halbleiterlichtquelle 20 weitere Komponenten des Kurvenlichtmoduls 14 an der kompakten und stabilen Struktur des Trägerelements 22 befestigt. Beim Gegenstand der Fig. 4 sind dies optische Elemente in Form des Reflektors 54, die Blendenwalze 56 mit ihrem Antrieb und ihrer Lagerung, insbesondere einem Elektromotor, und die Projektionslinse 60, die über den Linsenhalter 58 an dem Trägerelement 22 befestigt ist. Die Summe dieser Elemente 54, 56, 60 stellt eine Ausgestaltung des optischen Systems 22 aus der Fig. 1 dar.

Die Lagerung der Komplexlichtquelle in dem Schwenkrahmen erfolgt in der dargestellten Ausgestaltung in einer ersten Lagerung 30 und einer zweiten Lagerung 32 so, dass die Komplexlichtquelle in dem Schwenkrahmen 28 um eine Achse 34 schwenkbar gelagert ist. Wenigstens eine der beiden Lagerungen 30, 32 ist bevorzugt eine Kalottenlagerung, die eine Kugelkalotten-förmige Lagerschale, eine Kugel und einem Lagerstift aufweist.

In der Ausgestaltung, die in der Figur 4 dargestellt ist, wird die obere Lagerung 30 in Form einer Kalottenlagerung verwirklicht. Die Bezeichnung als obere Lagerung bezieht sich dabei auf ihre Lage im Raum bei einer bestimmungsgemäßen Verwendung des Kurvenlichtmoduls 14 in einem Scheinwerfer in einem Kraftfahrzeug. Bei einem Lichtmodul, das bei seiner bestimmungsgemäßen Verwendung eine horizontal verlaufende Hell-Dunkel-Grenze erzeugt, definiert der helle Bereich der Lichtverteilung einen unteren Bereich und der dunkle Bereich der Lichtverteilung einen oberen Bereich, so dass eine Unterscheidung zwischen oben und unten anhand der vom Lichtmodul erzeugten Lichtverteilung möglich ist.

Die obere Lagerung 30 weist eine Kugelkalotten-förmige Lagerschale 64 mit einer darin aufgenommenen Kugel 66 sowie einen ersten Lagerstift 42a auf. Die Kugel 66 weist eine mittige Ausnehmung auf, die dazu eingerichtet ist, den Lagerstift 42a aufzunehmen. Wenn die Kugelkalotten-förmige Lagerschale 64 und die Kugel 66 Bestandteile des Schwenkrahmens 28 sind, dann ist der zugehörige erste Lagerstift 42a ein Bestandteil der Komplexlichtquelle 26. Wenn die Kugelkalotten-förmige Lagerschale 64 und die Kugel 66 Bestandteile der Komplexlichtquelle 26 sind, dann ist der zugehörige erste Lagerstift 42a ein Bestandteil des Schwenkrahmens 28. Figur 4 zeigt eine Ausgestaltung, bei der die Kugelkalotten-förmige Lagerschale 64 und die Kugel 66 Bestandteile des Schwenkrahmens 28 und der zugehörige erste Lagerstift 42a ein Bestandteil der Komplexlichtquelle 26 ist.

In der Ausgestaltung, die in der Figur 4 dargestellt ist, wird die zweite Lagerung 32 durch ein eingepresstes Kugellager 70 verwirklicht.

In der dargestellten Ausgestaltung weist die zweite Lagerung 32 neben dem Kugellager 70 einen zweiten Lagerstift 42b auf, der von dem Kugellager 70, beziehungsweise von dem Innenring des Kugellagers 70 aufgenommen wird. Wenn das Kugellager 70 ein Bestandteil des Schwenkrahmens 28 ist, dann ist der zugehörige zweite Lagerstift 42b ein Bestandteil der Komplexlichtquelle 26. Dies entspricht der dargestellten Ausgestaltung. Wenn das Kugellager 70 dagegen ein Bestandteil der Komplexlichtquelle 26 ist, dann ist der zugehörige zweite Lagerstift 42b ein Bestandteil des Schwenkrahmens 28.

Das Kugellager 70 ist mit seinem äußeren Lagerring auf der unteren Seite des Kurvenlichtmoduls 14 in den Schwenkrahmen 28 eingepresst. Der Innenring des Kugellagers 70 nimmt den vorteilhafterweise als Kreuz ausgeführten zweiten Lagerstift 42b der Komplexlichtquelle 26 festsitzend auf. Der Festsitz wird dadurch erzeugt, dass der der zweite Lagerstift 42b bevorzugt mit leichtem Übermaß zum Innendurchmesser des Innenrings des Kugellagers 70 an die Komplexlichtquelle 26 einstückig angespritzt ist. Der zweite Lagerstift besteht in dieser Ausgestaltung also ebenfalls aus Kunststoff. In einer nicht im einzelnen dargestellten Ausgestaltung weist der zweite Lagerstift einen radialen Vorsprung, zum Beispiel in Form einer Stufe auf, die zusammen mit dem Innenring einen Anschlag bildet, bis zu dem der zweite Lagerstift in den Innenring des Kugellagers 70 eingeführt ist. Dadurch wird insbesondere in Schwerkraftrichtung ein fester Sitz des zweiten Lagerstiftes erzielt. Das untere Kugellager 70 trägt also das Gewicht der Komplexlichtquelle. Die ober Kalottenlagerung ist daher vom Gewicht entlastet.

Das Kugellager 70 ist durch einen vorzugsweise mit dem Schwenkrahmen 28 verschraubten Lagerdeckel 72 in seiner Position gesichert. Eine selbstsichernd ausgeführte Bügelfeder 76 sichert die Komplexlichtquelle 26 gegen unbeabsichtigtes Aushängen des Systems bei überhöhten Beschleunigungswerten in Z-Richtung.

Die Kalottenlagerung läßt insbesondere eine Schiefstellung des zugehörigen Lagerstiftes, hier des ersten Lagerstiftes 42a, zu. Achsfluchtungsfehler zwischen der ersten Lagerung 30 und der zweiten Lagerung 32 führen in jedem Fall zu einem verspannten Sitz der Lagerstifte 42a, 42b in ihren Aufnahmen, sei es die Aufnahme in der Kugel der Kalottenlagerung oder die Aufnahme in dem Innenring des Kugellagers 70. Dieser verspannte Sitz führt zwangsläufig zu einer, wenn auch geringen, Schiefstellung der Lagerstifte 42a, 42b relativ zueinander. Da die Kalottenlagerung eine solche Schiefstellung problemlos zulässt, treten dort, keine so hohen Flächenpressungswerte zwischen den Lagerflächen auf, wie es ohne eine Schiefstellungen tolerierende Lagerung der Fall wäre. Aufgrund der resultierenden geringen Flächenpressungswerte erlaubt dies auch eine verbesserte Einhaltung eines minimalen Lagerspiels bei tiefen Temperaturen.

Durch die Verwendung des Kalottenlagers für eine der beiden Lagerungen, insbesondere für die obere Lagerung, werden die Auswirkungen unvermeidbarer Verzugserscheinungen, die sich beim Herstellen des Schwenkrahmens 28 und der zweiten Trägerstruktur 22b der Komplexlichtlichtquelle 26 als Kunststoffspritzgussteile ergeben, auf die sich ergebenden Flächenpressungen in den Lagerungen verringert.

Um die gewünschte Genauigkeit zu erreichen, sieht eine bevorzugte Ausgestaltung vor, dass die Verbindung zwischen der Komplexlichtquelle 26 und dem Kalottenlager des Schwenkrahmens 28 mittels eines Präzisions-Lagerstiftes erfolgt, der in der als Halterahmen dienenden zweiten Trägerstruktur 22b der Komplexlichtquelle 26 gehalten wird und der in eine aus einem Kunststoff bestehende Kugel 66 eingreift die schwenkbar über die Lagerschale 64 mit dem Schwenkrahmen 28 verbunden ist. Der Präzisions-Lagerstift 42a ist bevorzugt aus Metall. Der Präzisionslagerstift ist bevorzugt durch Umspritzen eines Teils des Stiftes mit dem Material der als Halterahmen dienenden zweiten Trägerstruktur 22b fest mit diesem verbunden oder mit Übermaß in eine Ausnehmung im Halterahmen eingepresst.

Der Metallpass-Lagerstift 42a gewährleistet in Verbindung mit der Kugel 66 aus einem passend ausgesuchten Kunststoff eine über eine große Temperaturdifferenz spielarme Verbindung. Die Lagerschale 64 wird in einer bevorzugten Ausgestaltung durch Einschrauben in dem Schwenkrahmen 28 befestigt und weist zu diesem Zweck ein Außengewinde auf, dass zu einem Innengewinde in einer zur Aufnahme der Lagerschale 64 eingerichteten Ausnehmung in dem Schwenkrahmen 28 passt.

Die Figur 4 zeigt damit einen Querschnitt durch eine bevorzugte Ausgestaltung eines Kurvenlichtmoduls 14 zur Erläuterung von Ausgestaltungen der Erfindung. In der dargestellten Ausgestaltung ist die Lichtquelle 20 eine Halbleiterlichtquelle, die thermisch mit der als Kühlkörper dienenden ersten Trägerstruktur 22a des Trägerelements 22 gekoppelt ist. Das Trägerelement 22 weist bevorzugt ein Gebläse 50 mit einem Gebläsegehäuse auf, das aktiv einen Wärme von der Halbleiterlichtquelle 20 abführenden Luftstrom 52 erzeugt. Dabei wird die Kühlluft von dem Gebläse 50 aus einer zur Zeichnungsebene senkrechten Richtung angesaugt. Die Halbleiterlichtquelle 20 ist an der kompakten und stabilen Struktur des Trägerelements 22 befestigt. Die Erfindung ist aber auch ohne Gebläse verwendbar, also bei einer passiven Kühlung, bei der keine aktive Erzeugung eines Kühlluftstroms stattfindet.

Ein Teil der von der Halbleiterlichtquelle 20 erwärmten Luft 52 wird in der dargestellten Ausgestaltung in Richtung zur Projektionslinse 60 geblasen, wobei sie an der Blendenwalze 56 vorbeistreicht. Das Lichtmodul 14 ist also in dieser Ausgestaltung dazu eingerichtet, einen von einem Gebläse erzeugten Kühlluftstrom so zu führen, dass die Blende 56 zumindest zu einem Teil in dem Kühlluftstrom 52 liegt.

Mit der zur Projektionslinse 60 geblasenen Luft ist der Vorteil verbunden, dass die aufgeheizte Kühlluft Feuchtigkeit, die bei wechselnden Temperaturen und/oder Luftfeuchtigkeiten im Kraftfahrzeugscheinwerfer kondensieren kann, aufnimmt und mit dem Luftstrom aus dem Kraftfahrzeugscheinwerfer herausträgt.

Vorteilhaft ist auch, dass die Luft an der Blendenwalze 56 vorbeistreicht und damit Wärme von der Blendenwalze 56 abführen kann, wenn sich diese aufgeheizt haben sollte. Ein weiterer Vorteil besteht darin, dass das Gebläse 50 für eine Temperaturnivellierung sorgt, also ausgleichend auf Temperaturunterschiede innerhalb des Kurvenlichtmoduls 14 wirkt. Ein aufgrund von unterschiedlichen Temperaturen verschiedener Bereiche der zweiten Trägerstruktur 22b und/oder des Schwenkrahmens 28 bedingter Verzug, der zu einer Verspannung der Lagerungen 30, 32 führt, wird dadurch verringert. Damit wird auch die verzugsbedingte Flächenpressung zwischen den Lagerflächen der beiden Lagerungen 30, 32 vermindert.

Es ist daher bevorzugt, dass das Projektions-Lichtmodul 14 ein Kühlgebläse 50 aufweist und dass wenigstens ein Teil der vom Kühlluftgebläse 50 geförderten Kühlluft so geführt wird, dass sie zumindest auch Wärme von der Blendenwalze 56 abführen kann.

Darüber hinaus zeigt die Fig. 4 eine Aufteilung der Gebläseabluft auf mehrere Teilströme 52, wodurch zusätzlich zum Beispiel benachbarte Wärmequellen gekühlt werden können. Benachbarte Wärmequellen können zum Beispiel ein Lichtfunktionen steuerndes Steuergerät des Scheinwerfers und/oder um eine zugehörige Endstufenanordnung sein, wobei diese Aufzählung nicht abschließend sein soll. Auch dieses Merkmal trägt zu einer Nivellierung der Temperaturunterschiede innerhalb des Kurvenlichtmoduls 14 bei.

Durch die thermische Ankopplung der zweiten Trägerstruktur 22b an die erste Trägerstruktur 22a übernimmt die zweite Trägerstruktur auch Kühlkörperfunktionen. Sie nimmt also Wärme aus der ersten Trägerstruktur auf. Durch die gute Wärmeleitung wird diese Wärme auch dazu dienen, die beiden Lagerungen im Betrieb der Lichtquelle zu erwärmen, was den problematischen Effekt einer Lagerspieldegradation bei tiefen Temperaturen vorteilhafterweise verringert.

In einer bevorzugten Ausgestaltung ist die Blendenwalze 56 um eine horizontale, senkrecht zur optischen Achse 38 und bevorzugt parallel zu einer bei einer bestimmungsgemäßen Verwendung des Lichtmoduls 14 horizontal verlaufenden Drehachse drehbar gelagert und weist auf ihrem Umfang verschiedene Konturen auf, die durch die Sekundäroptik auf die Straße projiziert werden und dabei verschiedene Hell-Dunkel-Grenzen darstellen.

Das kleine Volumen, in das die Primäroptik das Licht fokussiert hat eine Fläche, die typischerweise kleiner bis gleich der oberen Hälfte der Querschnittsfläche der Blendenwalze bei einem längs ihrer Drehachse erfolgende Schnitt ist. Dies ist in einem Beispiel eine Fläche von etwa ca. 50 mm * 5 mm.

Das aus diesem kleinen Querschnitt austretende Licht wird durch die Sekundäroptik, in der dargestellten Ausgestaltung also durch die Projektionslinse 60, in die breite Lichtverteilung auf der Fahrbahn gestreut. Das bedeutet umgekehrt, dass von außen über die Sekundäroptik in das Projektionslichtmodul 14 einfallende Strahlung, also nicht nur sichtbares Licht, sondern auch Infrarotstrahlung und Ultraviolettstrahlung, entsprechend stark fokussiert wird. Diese Fokussierung kann zu thermischen Belastungen führen. Herkömmlicher Kunststoff hält diesen Belastungen unter ungünstigen Umständen, also bei hoher Strahlungsbelastung, nicht stand.

Um trotzdem die mit der Verwendung von Kunststoff einhergehenden Vorteile nutzen zu können, wird die Blendenwalze 56 bevorzugt aus einem Verbundmaterial aus Kunststoff mit in den Kunststoff eingebetteten Zusätzen verwirklicht, wobei die Zusätze die Wärmeleitfähigkeit des Verbundmaterials gegenüber dem reinen Kunststoff erhöhen. In einer bevorzugten Ausgestaltung besteht die Blendenwalze aus dem gleichen Material wie die zweite Trägerstruktur 22b.

Durch die Verwendung von gut wärmeleitendem Material für die Blendenwalze ist es nicht nur möglich, effektiv Wärme von der Blendenwalze abzuführen, sondern es ist auch möglich diese Wärme zur Erwärmung der Lagerungen, hier der Lagerungen der Blendenwalze, zu verwenden, was ebenfalls zur Vermeidung nachteiliger Wirkungen einer Lagerspieldegradation bei tiefen Temperaturen entgegenwirkt.

Bei diesen Ausgestaltungen ergeben sich also einerseits kombinatorische Wirkungen insofern, als sie zu einer Nivellierung von Temperaturunterschieden im Kurvenlichtmodul beitragen und ferner auch insofern, als sie zu einer Vermeidung einer Lagerspieldegradation bei tiefen Temperaturen beitragen.

Andererseits müssen diese Merkmale bei der Erfindung nicht zwangsläufig verwirklicht sein, weil die Erfindung mit unterschiedlichen optischen Systemen 24, seien es Reflexionssysteme oder Projektionssysteme, verwendbar ist.

## Patentansprüche

1. Kurven-Lichtmodul (14) eines Kraftfahrzeugscheinwerfers (10), mit einem Trägerelement (22), das dazu eingerichtet ist, mit einer Halbleiterlichtquelle (20), einem optischen System (24), einer Aufnahme (46) für eine Blende (56), und einem Linsenhalter (58) zu einer in sich starren Komplexlichtquelle (26) verbunden zu werden, **dadurch gekennzeichnet, dass** sich das Trägerelement (22) aus einer als Kühlkörper und Stützkörper dienenden ersten Trägerstruktur (22a) aus Metall und einer als Halterahmen dienenden zweiten Trägerstruktur (22b) aus einem Kunststoff oder einem auf Kunststoff basierenden Verbundmaterial zusammensetzt, wobei alle Bestandteile des optischen Systems (24) an der zweiten Trägerstruktur (22b) befestigt sind und wobei ein Teil der ersten Trägerstruktur (22a) in das Material der zweiten Trägerstruktur (22b) fest und nicht zerstörungsfrei lösbar eingebettet ist und wobei die zweite Trägerstruktur (22b) in einem Schwenkrahmen (28) um einer Achse (34) schwenkbar gelagert ist.

2. Lichtmodul (14) nach Anspruch 1, **dadurch gekennzeichnet, dass** der eingebettete Teil der ersten Trägerstruktur (22a) durch Umspritzen dieses Teils mit Material der zweiten Trägerstruktur (22b) in das Material der zweiten Trägerstruktur eingebettet ist.

3. Lichtmodul (14) nach Anspruch 2, **dadurch gekennzeichnet, dass** die erste Trägerstruktur (22a) Vorsprünge und/oder Ausnehmungen (40) aufweist, die beim Aushärten des Materials der zweiten Trägerstruktur (22b) einen Formschluss mit dem sie umgebenden Material der zweiten Trägerstruktur (22b) eingehen.

4. Lichtmodul (14) nach einem der vorhergehenden Ansprüche, **dadurch gekennzeichnet**, **dadurch gekennzeichnet, dass** die zweite Trägerstruktur (22b) ein auf Kunststoffmaterial basierendes Verbundmaterial enthält, das eine Wärmeleitfähigkeit besitzt, die größer ist als die Wärmeleitfähigkeit des Kunststoff-Basismaterials.

5. Lichtmodul (14) nach einem der vorhergehenden Ansprüche, **dadurch gekennzeichnet, dass** ein Polyetherimid (PEI)- Kunststoff ein Basismaterial für den Verbundwerkstoff ist.

6. Lichtmodul (14) nach Anspruch 5, **gekennzeichnet durch** Ultem als Basismaterial für den Verbundwerkstoff.

7. Lichtmodul (14) nach einem der vorhergehenden Ansprüche, **dadurch gekennzeichnet, dass** der Verbundwerkstoff Kohlefasern und/oder Metalloxide als Zusätze enthält.

8. Lichtmodul (14) nach einem der vorhergehenden Ansprüche, **dadurch gekennzeichnet, dass** die erste Trägerstruktur (22a) als Gehäuse ausgestaltet ist, das ein Gebläse (50) aufnimmt.

9. Lichtmodul (14) nach einem der vorhergehenden Ansprüche, **dadurch gekennzeichnet, dass** die zweite Trägerstruktur (22b) Befestigungsgeometrien für die Komplexlichtquelle (26) und/oder für optische Elemente des Lichtmoduls (14) aufweist.

10. Lichtmodul (14) nach einem Anspruch 9, **dadurch gekennzeichnet, dass** die zweite Trägerstruktur (22b) in ihr Material eingebettete Lagerstifte (42a) aus Metall, eine Aufnahme (46) für eine schwenkbare Blende (56) und deren Antrieb und eine Aufnahme für einen Linsenhalter (58) aufweist.

## Claims

1. An adaptive light module (14) of a motor vehicle headlight (10), having a support element (22), which is arranged to be connected with a semiconductor light source (20), an optical system (24), a receptacle (46) for a screen (56), and a lens holder (58), to an intrinsically rigid complex light source (28), **characterized in that** the support element (22) is composed of a first support structure (22a), acting as a cooling element and mounting frame, of metal and a second support structure (22b), serving as a mounting frame, and consisting of a plastic or a plastic-based composite material, and all the components of the optical system (24) are secured to the second support structure (22b), and a portion of the first support structure (22a) is embedded firmly, and in such a manner that it cannot be separated without being destroyed, in the material of the second support structure (22b), and the second support structure (22b) is supported pivotably about an axis (34) in a swivel frame (28).

2. The light module (14) of claim 1, **characterized in that** the embedded part of the first support structure (22a) is embedded in the material of the second support structure by being spray-coated with material of the second support structure (22b).

3. The light module (14) of claim 2, **characterized in that** the first support structure (22a) has protrusions and/or recesses (40), which upon hardening of the material of the second support structure (22b) become positively locked into the material, surrounding them, of the second support structure (22b).

4. The light module (14) of one of the foregoing claims, **characterized in that** the second support structure (22b) contains a composite material based on plastic material, which composite material has a heat conductivity that is greater than the heat conductivity of the plastic base material.

5. The light module (14) of one of the foregoing claims, **characterized in that** a polyetherimide (PEI) plastic is a base material for the composite material.

6. The light module (14) of claim 5, **characterized by** Ultem as base material for the composite material.

7. The light module (14) of one of the foregoing claims, **characterized in that** the composite material contains carbon fibers and/or metal oxides as additives.

8. The light module (14) of one of the foregoing claims, **characterized in that** the first support structure (22a) is designed as a housing, which receives a blower (50).

9. The light module (14) of one of the foregoing claims, **characterized in that** the second support structure (22b) has fastening geometries for the complex light source (26) and/or for optical elements of the light module (14) .

10. The light module (14) of claim 9, **characterized in that** the second support structure (22b) has metal bearing pins (42a) embedded in its material, a receptacle (46) for a pivotable screen (56) and for driving it, and a receptacle for a lens holder (58).

## Revendications

1. Module d'éclairage en virage (14) d'un phare de véhicule automobile (10), comportant un élément de support (22), qui est aménagé pour être relié à une source lumineuse à semi-conducteurs (20), un système optique (24), un logement (46) de diaphragme (56), et un porte-lentille (58) en une source de lumière complexe (26) fixe en soi, **caractérisé en ce que** l'élément de support (22) se compose d'une première structure de support (22a) en métal servant de corps de refroidissement et de corps d'appui et d'une deuxième structure de support (22b) en plastique ou en un matériau composite à base de plastique servant de cadre de retenue, dans lequel tous les composants du système optique (24) sont fixés à la deuxième structure de support (22b) et dans lequel une partie de la première structure de support (22a) est incorporée dans le matériau de la deuxième structure de support (22b) de manière fixe et ne pouvant être désolidarisée sans destruction, et dans lequel la deuxième structure de support (22b) est logée dans un cadre pivotant (28) de façon à pouvoir pivoter autour d'un axe (34).

2. Module d'éclairage (14) selon la revendication 1, **caractérisé en ce que** la partie incorporée de la première structure de support (22a) est incorporée dans le matériau de la deuxième structure de support par surmoulage de cette partie avec du matériau de la deuxième structure de support (22b).

3. Module d'éclairage (14) selon la revendication 2, **caractérisé en ce que** la première structure de support (22a) présente des saillies et/ou évidements (40) qui adoptent, lors du durcissement du matériau de la deuxième structure de support (22b), une correspondance de forme avec le matériau de la deuxième structure de support (22b) qui l'entoure.

4. Module d'éclairage (14) selon l'une des revendications précédentes, **caractérisé en ce que** la deuxième structure de support (22b) contient un matériau composite à base de matière plastique, qui possède une conductibilité thermique qui est supérieure à la conductibilité thermique du matériau de base en plastique.

5. Module d'éclairage (14) selon l'une des revendications précédentes, **caractérisé en ce qu'**un plastique de polyétherimide (PEI) est un matériau de base pour le matériau composite.

6. Module d'éclairage (14) selon la revendication 5, **caractérisé par** de l'Ultem en tant que matériau de base pour le matériau composite.

7. Module d'éclairage (14) selon l'une des revendications précédentes, **caractérisé en ce que** le matériau composite contient des fibres de carbone et/ou des oxydes métalliques en tant qu'additifs.

8. Module d'éclairage (14) selon l'une des revendications précédentes, **caractérisé en ce que** la première structure de support (22a) est configurée en tant que boîtier, qui loge un ventilateur (50).

9. Module d'éclairage (14) selon l'une des revendications précédentes, **caractérisé en ce que** la deuxième structure de support (22b) présente des géométries de fixation pour la source de lumière complexe (26) et/ou pour des éléments optiques du module d'éclairage (14).

10. Module d'éclairage (14) selon la revendication 9, **caractérisé en ce que** la deuxième structure de support (22b) présente des tenons (42a) en métal incorporés dans son matériau, un logement (46) de diaphragme pivotant (56) et son entraînement, et un logement de porte-lentille (58).
